# EUROPEAN PATENT APPLICATION

(11) **EP 4 714 312 A1**
(43) Date of publication of application: **25.03.2026**
(21) Application number: 24201067.6
(22) Date of filing: 18.09.2024
(51) Int. Cl.: A47J 31/36, A47J 31/40, A47J 31/42, A47J 31/52

(54) **KITCHEN DISPENSING ASSEMBLY**

(71) Applicant: Versuni Holding B.V., 1082 MD Amsterdam (NL)
(72) Inventor: BRUINSMA, Rodin Enne, 1082 MD Amsterdam (NL); RIJSKAMP, Peter, 1082 MD Amsterdam (NL); HOLWERDA, Simon Renze, 1082 MD Amsterdam (NL); DE VRIES, Johannes Hotze Bernhard, 1082 MD Amsterdam (NL)
(74) Representative: Vollering, Stefanus Franciscus Maria

(57) **Abstract**

Provided is a kitchen dispensing assembly (100) having a brewing vessel (102) and a granular material dispenser for dispensing granular material (105) into the brewing vessel. A closure member is provided for closing the brewing vessel containing the granular material. A closing system is configured to cause relative movement of the closure member and the brewing vessel so that the closure member closes the brewing vessel. A user-actuatable element (LEV) is manually moveable by a user. The closing system is configured so that, in an operational mode of the kitchen dispensing assembly, the relative movement of the closure member and the brewing vessel to close the brewing vessel is implemented automatically in a delayed closing operation that is delayed relative to the movement of the user-actuatable element, to allow the dispensing of the granular material into the brewing vessel before the brewing vessel is closed by the closure member.

## Description

### FIELD OF THE INVENTION

The invention relates to a kitchen dispensing assembly, for example a beverage machine or a ground coffee dispenser.

### BACKGROUND OF THE INVENTION

There are many different types of commercially available kitchen dispensing assemblies, e.g. beverage machines and ground coffee dispensers. Such kitchen dispensing assemblies can vary in terms of how much a user is required to interact with the beverage machine during use.

In a manual espresso machine, the user fills a brewing vessel, which brewing vessel is included in a so-called portafilter, with coffee grounds. The user then tamps the coffee grounds within the brewing vessel with sufficient pressure to create a so-called puck of ground coffee. The brewing vessel containing the puck is mounted to the coffee machine, usually via a bayonet-type coupling. Next, the coffee machine drives hot water through the puck and the resulting coffee is dispensed via a spout that is typically integrated in the portafilter. After brewing, the user is required to disconnect the portafilter from the coffee machine, and empty the portafilter, throwing away the used coffee grounds.

There are also manual espresso machines with an integrated grinder. In such machines, the portafilter may be movable by the user between a first position where it receives ground coffee and a second position where coffee is brewed. Tamping may be done manually or via a manually operated lever.

In a fully automatic espresso machine, all of the above-mentioned steps are done automatically, in one and the same machine. The machine comprises a bean container and a grinder, to make the coffee grounds. These grounds are transported into a brewing vessel and tamped automatically, via a piston that may be hydraulically actuated or actuated via an electromotor. Next, hot water is driven through the coffee grounds in the brewing vessel, coffee is brewed and dispensed, and the used coffee grounds are discharged from the brewing vessel into a waste bin within the machine. By these steps being implemented automatically, the fully automatic espresso machine can save the user time. Moreover, consistent results are achievable due to the machine being capable of implementing the steps more repeatably than a user.

In some kitchen dispensing assemblies, for example so-called semi-automatic espresso machines, a portafilter may be manually mounted in the assembly, and a lever is provided for lowering a piston to close the portafilter and/or tamp the ground coffee therein. The user may need to wait until the portafilter has been filled with ground coffee before she/he can operate the lever, which can be inconvenient.

### SUMMARY OF THE INVENTION

The invention is defined by the claims.

According to examples in accordance with an aspect of the invention, there is provided a kitchen dispensing assembly comprising: a brewing vessel mountable in, and demountable from, the kitchen dispensing assembly; a granular material dispenser for dispensing granular material into the mounted brewing vessel; a closure member for closing the brewing vessel containing the granular material, a closing system being configured to cause relative movement of the closure member and the brewing vessel so that the closure member closes the brewing vessel; and a user-actuatable element that is manually moveable by a user, relative to the mounted brewing vessel, from a first position to a second position, the closing system being configured so that, in an operational mode of the kitchen dispensing assembly, the relative movement of the closure member and the brewing vessel to close the brewing vessel is implemented automatically in a delayed closing operation that is delayed relative to the movement of the user-actuatable element to allow the dispensing of the granular material into the brewing vessel before the brewing vessel is closed by the closure member, wherein the kitchen dispensing assembly is configured to require demounting of the brewing vessel from the kitchen dispensing assembly by the user to enable emptying of the granular material from the brewing vessel.

By requiring demounting of the brewing vessel by the user to enable emptying of the granular material from the brewing vessel, the kitchen dispensing assembly can be regarded as requiring demounting of the brewing vessel following each dispensing cycle performed using the kitchen dispensing assembly.

Following demounting of the brewing vessel, the user can empty the used granular material from the brewing vessel, e.g. into a suitable waste container.

The user can also clean the demounted brewing vessel while it is demounted from the kitchen dispensing assembly, thereby helping to ensure that the brewing vessel is appropriately clean prior to initiating a new dispensing cycle by remounting the brewing vessel in the kitchen dispensing assembly.

The delayed closing operation can assist to enhance user convenience, since the user does not have to first wait for the granular material to be dispensed into the brewing vessel and then move the user-actuatable element to cause the brewing vessel to be closed by the closure member.

Rather, the kitchen dispensing assembly can allow the user to move the user-actuatable element, and not concern her/himself with waiting for delivery of the granular material into the brewing vessel. This is because the closing system implements the relative movement of the closure member and the brewing vessel automatically, in other words without further user involvement, to close the brewing vessel after the delay that allows dispensing of the granular material into the brewing vessel.

It is nonetheless noted that there may be scenarios in which the delay between the user moving the user-actuatable element and the closing of the brewing vessel by the closure member is not needed, for example when the granular material has already been delivered into the brewing vessel. Accordingly, the closing system may be configured so that, in a further operational mode of the kitchen dispensing assembly, the relative movement of the closure member and the brewing vessel to close the brewing vessel is implemented without delay relative to the movement of the user-actuatable element, or with less delay than that used to delay the delayed closing operation.

In this way, the delayed closing operation need only be employed when the delay between the user moving the user-actuatable element and the closure member closing the brewing vessel can usefully allow delivery of the granular material into the brewing vessel.

In some embodiments, the kitchen dispensing assembly comprises a mechanical energy store configured to store mechanical energy from the user's movement of the user-actuatable element, with the mechanical energy store being arranged to release the stored mechanical energy automatically to implement closing of the brewing vessel by the closure member, e.g. to implement the delayed closing operation.

Thus, closing of the brewing vessel can be achieved in an energy efficient way, making use of the user's movement of the user-actuatable element.

The mechanical energy store can take any suitable form. In some embodiments, the mechanical energy store comprises a resilient member, e.g. a resilient member in the form of a spring, whose deformation in response to the user's movement of the user-actuatable element stores the mechanical energy.

In some embodiments, the granular material dispenser is configured to dispense the granular material into the mounted brewing vessel subject to the user-actuatable element being moved by the user. For example, the granular material dispenser can be triggered by the movement of the user-actuatable element to dispense the granular material into the mounted brewing vessel.

In some embodiments, the kitchen dispensing assembly comprises a locking mechanism configured to, e.g. in response to the user's movement of the user-actuatable element, lock the kitchen dispensing assembly in a filling configuration in which the granular material dispenser is able to dispense the granular material into the brewing vessel, with the locking mechanism being automatically unlockable to implement the delayed closing operation.

The locking mechanism can be implemented in any suitable manner. The locking mechanism can, for example, include an electromechanical actuator, such as a solenoid, and/or a hydraulic mechanism, e.g. a hydraulic mechanism comprising an electronic valve.

In more general terms, the kitchen dispensing assembly may comprise a motorized, electromechanical, pneumatic and/or hydraulic system arranged to automatically unlock the locking mechanism to implement the delayed closing operation.

In embodiments in which the kitchen dispensing assembly includes the mechanical energy store, the mechanical energy store may be configured to release the stored mechanical energy when the locking mechanism is unlocked.

The user-actuatable element can have any suitable design provided that the user-actuatable element is moveable by the user. In some embodiments, the user-actuatable element comprises a lever moveable, e.g. pivotable, by the user between the first position and the second position.

Such a lever can provide a relatively convenient and user-friendly way of implementing the user-actuatable element.

In some embodiments, the lever is moveable in a downwards or upwards direction, when the kitchen dispensing assembly is orientated for use, when being moved between the first position and the second position. For example, the lever may be moveable in the downwards direction when being moved from the first position to the second position. Thus, downwards movement, e.g. downwards pivoting, of the lever to the second position can enable closure of the brewing vessel by the closure member, e.g. following the delay that allows delivery of the granular material into the brewing vessel while the brewing vessel is still open.

In some embodiments, the closure member comprises a tamper head, and the closing system is configured to drive relative movement of the tamper head and the brewing vessel to tamp the granular material received in the brewing vessel during the relative movement of the closure member and the brewing vessel. Compressing, in other words tamping, of the granular material in this manner may provide a compressed mass of granular material through which a liquid, such as water, can be passed to prepare the beverage.

In some embodiments, the granular material dispenser comprises a grinding assembly for grinding material to form the granular material. The granular material ground by the grinding assembly can be dispensed into the mounted brewing vessel, for example during or following grinding of the material.

In some embodiments, the kitchen dispensing assembly, e.g. the closing system thereof, comprises one or more of an electromechanical system, a motorized system, a hydraulic assembly, and a pneumatic system configured to enable, e.g. drive, relative movement of the closure member and the brewing vessel so that the closure member closes the brewing vessel.

In some embodiments, the kitchen dispensing assembly comprises a liquid dispenser for delivering liquid into the brewing vessel containing the granular material.

In embodiments in which the hydraulic system is included in the kitchen dispensing assembly, the hydraulic system may be arranged to automatically unlock the locking mechanism to implement the delayed closing operation.

Alternatively or additionally, the hydraulic system can be arranged to deliver the liquid into the brewing vessel containing the granular material.

In some embodiments, the liquid dispenser is arranged to deliver the liquid into the brewing vessel containing the granular material while the brewing vessel remains mounted in the kitchen dispensing assembly, with the kitchen dispensing assembly being configured to require demounting of the brewing vessel from the kitchen dispensing assembly by the user to enable emptying of the granular material from the brewing vessel following the delivery of the liquid into the brewing vessel containing the granular material. This can provide enhanced user convenience, since the user is not required to demount the brewing vessel from the kitchen dispensing assembly until after the liquid has been delivered into the brewing vessel to brew the beverage via contact between the liquid and the granular material.

In other embodiments, the kitchen dispensing assembly is configured to require demounting of the brewing vessel, containing the granular material, therefrom, and remounting of the brewing vessel containing the granular material in the kitchen dispensing assembly in a brewing position that enables the liquid dispenser to deliver the liquid into the brewing vessel containing the granular material.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 depicts part of a kitchen dispensing assembly according to an example;
FIG. 2 shows a brewing vessel for a kitchen dispensing assembly;
FIGs. 3A to 3D show operation of a kitchen dispensing assembly according to an example; and
FIG. 4 provides a diagram showing a hydraulic system of a kitchen dispensing assembly according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a kitchen dispensing assembly having a brewing vessel and a granular material dispenser for dispensing granular material into the brewing vessel. A closure member is provided for closing the brewing vessel containing the granular material. A closing system is configured to cause relative movement of the closure member and the brewing vessel so that the closure member closes the brewing vessel. A user-actuatable element is manually moveable by a user. The closing system is configured so that, in an operational mode of the kitchen dispensing assembly, the relative movement of the closure member and the brewing vessel to close the brewing vessel is implemented automatically in a delayed closing operation that is delayed relative to the movement of the user-actuatable element, to allow the dispensing of the granular material into the brewing vessel before the brewing vessel is closed by the closure member.

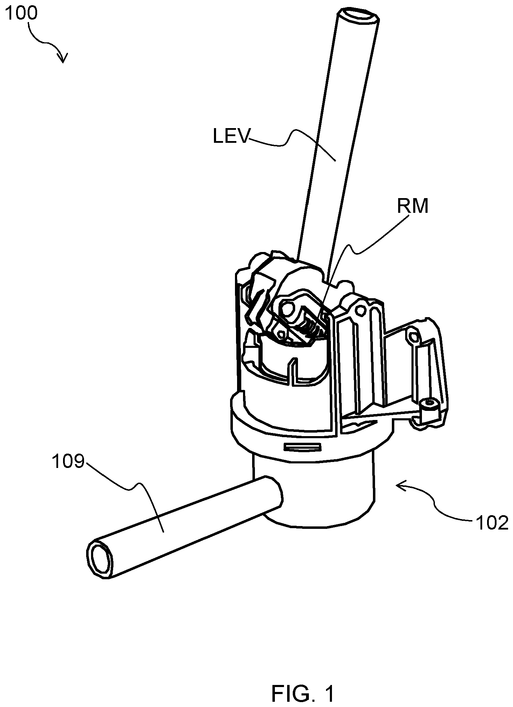

FIG. 1 shows a kitchen dispensing assembly 100 according to an example. The kitchen dispensing assembly 100 comprises a brewing vessel 102. The brewing vessel 102 is mountable in, and demountable from, the kitchen dispensing assembly 100.

The kitchen dispensing assembly 100 comprises a granular material dispenser for dispensing granular material into the mounted brewing vessel 102. Once received in the brewing vessel 102, the granular material can be combined with liquid, e.g. water, to brew a beverage in the brewing vessel 102.

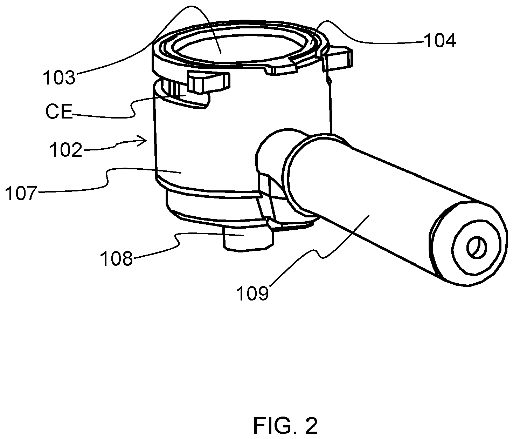

Referring to FIG. 2, the brewing vessel 102 may have a cavity 103 for receiving the granular material and the liquid. The cavity 103 of the brewing vessel 102 may be delimited by a wall 104 of the brewing vessel 102 that extends around the cavity 103.

Regarding the granular material, particular mention is made of the granular material comprising, e.g. being, ground coffee, although in principle other types of granular material can be combined with the liquid, e.g. water, in order to brew the beverage.

It is generally noted that the term "granular material" as used herein may refer to a particulate material or powder.

In some embodiments, the granular material dispenser includes a grinding assembly for grinding material to form the granular material. The grinding assembly can have any suitable design. In some embodiments, the grinding assembly comprises a first grinder member and a second grinder member, with a grinding space being defined between the first and second grinder members.

In such embodiments, the material, e.g. coffee beans, may be grindable in the grinding space defined between the first and second grinder members.

The first and second grinder members can, for example, be regarded as grinding discs or grinder stones. In some embodiments, the first and second grinder members are in the form of grinder burrs.

Driving of movement, e.g. rotation, of the first and/or second grinder members can be implemented in any suitable manner. In some embodiments, rotation of the first grinder member and/or the second grinder member is driven by an electrical motor included in the grinding assembly.

The granular material ground by the grinding assembly can be dispensed into the mounted brewing vessel 102, for example during or following grinding of the material.

In some embodiments, and irrespective of whether or not the grinding assembly is included in the granular material dispenser, the granular material dispenser comprises a chute through which the granular material is deliverable, e.g. at least partly by gravity, towards the mounted brewing vessel 102.

More generally, the kitchen dispensing assembly 100 is configured to require demounting of the brewing vessel 102 by the user to enable emptying of the granular material from the brewing vessel 102. By requiring demounting of the brewing vessel 102 by the user to enable emptying of the granular material from the brewing vessel 102, the kitchen dispensing assembly 100 can be regarded as requiring demounting of the brewing vessel 102 following each dispensing cycle, e.g. brewing cycle, performed using the kitchen dispensing assembly 100.

Following demounting of the brewing vessel 102, the user can empty the used granular material from the brewing vessel 102, e.g. into a suitable waste container.

The user can also clean the demounted brewing vessel 102 while it is demounted from the kitchen dispensing assembly 100, thereby helping to ensure that the brewing vessel 102 is appropriately clean prior to initiating a new dispensing cycle by remounting the brewing vessel 102 in the kitchen dispensing assembly 100.

The kitchen dispensing assembly 100 comprises a closure member for closing the brewing vessel 102 containing the granular material, with a closing system being configured to cause relative movement of the closure member and the brewing vessel 102 so that the closure member closes the brewing vessel 102. Closing of the brewing vessel 102 in this manner can, for example, define a brewing chamber between the brewing vessel 102 and the closure member, in which brewing chamber the granular material is combinable with liquid, e.g. water, to brew a beverage.

In some embodiments, the kitchen dispensing assembly 100, e.g. coffee machine, comprises a single position in which the brewing vessel 102 is mountable and demountable from the kitchen dispensing assembly 100.

In such embodiments, the granular material may be deliverable into the brewing vessel 102 when mounted in this single position, and the brewing vessel 102 may then be closed by the closure member to define the brewing chamber.

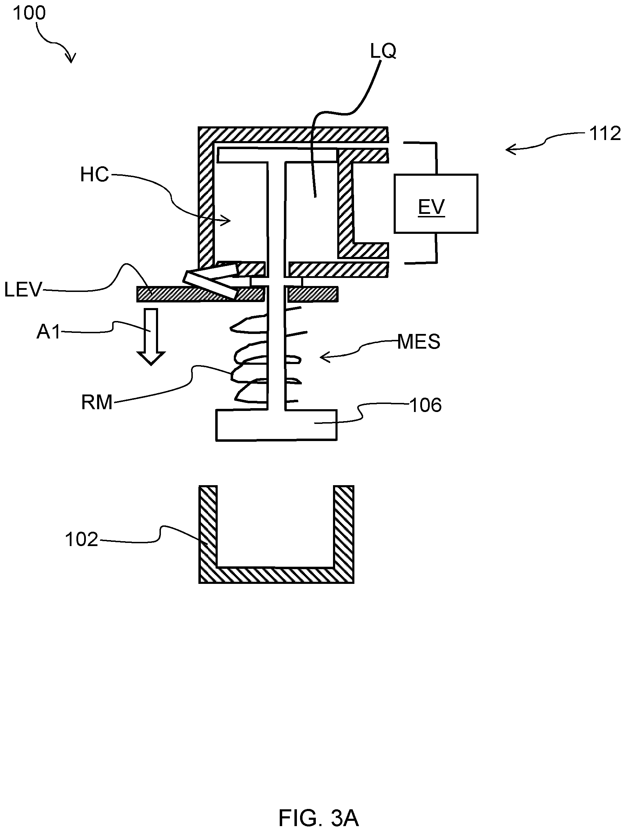

In some embodiments, such as shown in FIGs. 3A to 3D, the closure system is configured to lower the closure member towards the granular material 105 received in the brewing vessel 102.

It is noted, for the avoidance of any doubt, that lowering of the closure member into the brewing vessel 102 should not be regarded as being limiting, and in other embodiments the brewing vessel 102 may be lifted towards the closure member, in which case the closure member may be stationary. Alternatively, the closure member and the brewing vessel 102 may both be moved towards each other.

In some embodiments, and referring to FIGs. 3A to 3D, the closure member comprises a tamper head 106, and the closing system is configured to drive relative movement of the tamper head 106 and the brewing vessel 102 to tamp the granular material 105 received in the brewing vessel 102 during the relative movement of the closure member/tamper head 106 and the brewing vessel 102.

Compressing, in other words tamping, of the granular material 105 in this manner may provide a compressed mass of granular material 105 through which the liquid, such as water, can be passed to prepare the beverage.

A denser mass of granular material 105, e.g. ground coffee, results from the tamping that provides more resistance to liquid flow therethrough than that provided by the granular material 105 prior to tamping.

The brewing vessel 102 can have any suitable design. In some embodiments, and referring again to FIG. 2, the brewing vessel 102 includes a filter-supporting portion 107 for supporting a filter, for example a filter comprising a perforate base on which the granular material 105 is supportable when received in the cavity 103.

Such a filter may retain the granular material 105, e.g. ground coffee, but allow the beverage, e.g. brewed coffee, to pass therethrough.

The brewing vessel 102 may also include the filter, e.g. perforate base, on which the granular material is supportable when received in the cavity 103.

In some embodiments, such as shown in FIG. 2, the brewing vessel 102 comprises a spout 108 through which brewed coffee is deliverable, e.g. into a cup or pot placed beneath the spout 108. Such a spout 108 may be arranged downstream of the filter.

The brewing vessel 102 may be a portable component that is manipulable by a user separately from (a remainder of) the kitchen dispensing assembly 100 to which the brewing vessel 102 is mountable. For example, the brewing vessel 102 may have a handle 109 for assisting the user to manipulate the brewing vessel 102, for example to move the brewing vessel 102 towards and away from the kitchen dispensing assembly 100, when demounted therefrom.

It is noted that the brewing vessel 102 being a portable component and including the filter-supporting portion 107 may cause the brewing vessel 102 to be regarded as a so-called portafilter.

Whilst the brewing vessel 102, e.g. portafilter, is shown in FIG. 1 as being included in the kitchen dispensing assembly 100, owing to the possibility of the brewing vessel 102 being a portable component that is manipulable separately from other components of the kitchen dispensing assembly 100, it is also contemplated that the brewing vessel 102 is supplied to the user separately from the kitchen dispensing assembly 100.

As shown in FIG. 2, the brewing vessel 102 can include a coupling element CE, e.g. groove(s) and/or protrusion(s), that enables mounting/demounting of the brewing vessel 102 in/from the kitchen dispensing assembly 100. Such a coupling element CE can, for instance, be included in a bayonet-type coupling between the brewing vessel 102 and a mounting portion of the kitchen dispensing assembly 100. Numerous alternative ways of mounting/demounting the brewing vessel 102 in/from the kitchen dispensing assembly 100 can be contemplated.

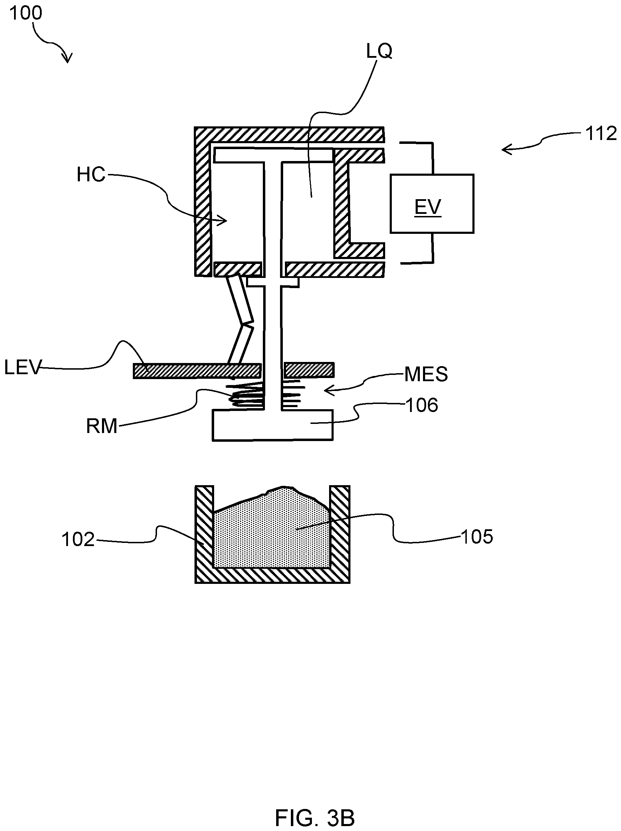

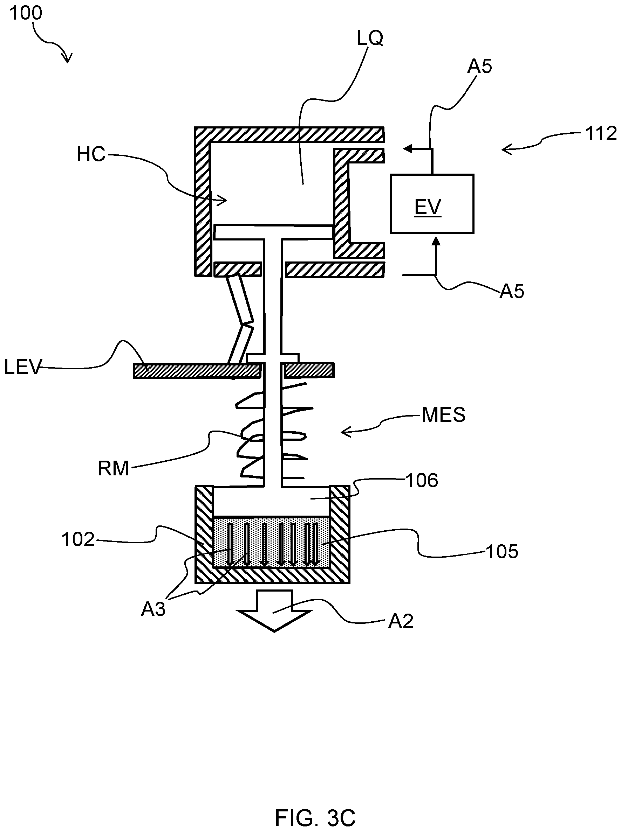

More generally, and referring to FIGs. 1 and 3A to 3D, the kitchen dispensing assembly 100 comprises a user-actuatable element LEV that is manually moveable by a user, relative to the mounted brewing vessel 102, from a first position (see FIG. 3A) to a second position (see FIGs. 3B and 3C).

The closing system is configured so that, in an operational mode of the kitchen dispensing assembly 100, the relative movement of the closure member and the brewing vessel 102 to close the brewing vessel 102 is implemented automatically in a delayed closing operation that is delayed relative to the movement of the user-actuatable element LEV to allow the dispensing of the granular material 105 into the brewing vessel 102 before the brewing vessel 102 is closed by the closure member.

Such a delayed closing operation can assist to enhance user convenience, since the user does not have to first wait for the granular material 105 to be dispensed into the brewing vessel 102 and then move the user-actuatable element LEV to cause the brewing vessel 102 to be closed by the closure member. Rather, the kitchen dispensing assembly 100 can allow the user to move the user-actuatable element LEV (as denoted by arrow A1 in FIG. 3A), and not concern her/himself with waiting for delivery of the granular material 105 into the brewing vessel 102. This is because the closing system implements the relative movement of the closure member and the brewing vessel 102 automatically (see FIG. 3C), in other words without further user involvement, to close the brewing vessel 102 after the delay that allows dispensing of the granular material 105 into the brewing vessel 102 (see FIG. 3B).

In some embodiments, the granular material dispenser is configured to dispense the granular material 105 into the mounted brewing vessel 102 subject to the user-actuatable element LEV being moved by the user. For example, the granular material dispenser can be triggered by the movement of the user-actuatable element LEV to dispense the granular material 105 into the mounted brewing vessel 102.

It is noted that there may be scenarios in which the delay between the user moving the user-actuatable element LEV and the closing of the brewing vessel 102 by the closure member is not needed, for example when the granular material 105 has already been delivered into the brewing vessel 102. Accordingly, the closing system may be configured so that, in a further operational mode of the kitchen dispensing assembly 100, the relative movement of the closure member and the brewing vessel 102 to close the brewing vessel 102 is implemented without delay relative to the movement of the user-actuatable element LEV, or with less delay than that used to delay the delayed closing operation.

In this way, the delayed closing operation need only be employed when the delay between the user moving the user-actuatable element LEV and the closure member closing the brewing vessel 102 can usefully allow delivery of the granular material 105 into the brewing vessel 102.

The user-actuatable element LEV can be of any suitable type. In some embodiments, such as shown in FIG. 1, the user-actuatable element LEV is a lever moveable, e.g. pivotable, by the user between the first position and the second position. Such a lever can provide a relatively convenient and user-friendly way of implementing the user-actuatable element LEV.

In some embodiments, such as shown in FIGs. 1 and 3A to 3D, the lever is moveable in a downwards or upwards direction, when the kitchen dispensing assembly 100 is orientated for use, when being moved between the first position and the second position. For example, the lever may be moveable in the downwards direction when being moved from the first position to the second position. Thus, downwards movement, e.g. pivoting, of the lever to the second position can enable closure of the brewing vessel 102 by the closure member, e.g. following the delay that allows delivery of the granular material 105 into the brewing vessel 102 while the brewing vessel 102 is still open.

In some embodiments, such as shown in FIGs. 3A to 3D, the kitchen dispensing assembly 100 comprises a mechanical energy store MES configured to store mechanical energy from the user's movement of the user-actuatable element LEV, with the mechanical energy store MES being arranged to release the stored mechanical energy automatically to implement closing of the brewing vessel 102 by the closure member, e.g. to implement the delayed closing operation.

Thus, closing of the brewing vessel 102 can be achieved in an energy efficient way, making use of the user's movement of the user-actuatable element LEV, e.g. the lever.

The mechanical energy store MES can take any suitable form. In some embodiments, such as shown in FIGs. 3A to 3D, the mechanical energy store MES comprises a resilient member RM, e.g. a resilient member RM in the form of a spring, whose deformation in response to the user's movement of the user-actuatable element LEV stores the mechanical energy.

The arrow A1 in FIG. 3A denotes the direction of movement of the user-actuatable element LEV that deforms, in this case compresses, the resilient member RM. The resilient member RM in the deformed/compressed state is shown in FIG. 3B. FIG. 3C schematically depicts release of the stored mechanical energy via recovery of the shape of the resilient member RM. This shape recovery entails movement of the closure member to close the brewing vessel 102.

The arrows A3 in FIG. 3C may denote compression of the granular material 105 during tamping of the granular material 105 by the tamper head 106, noting that in this non-limiting example the mechanical energy store MES is arranged to release the stored mechanical energy to cause the tamper head 106 to tamp the granular material 105 in the brewing vessel 102. Alternatively or additionally, the arrows A3 may denote brewing of a beverage in the brewing vessel 102 by passing liquid, e.g. water, through the granular material 105, e.g. tamped granular material 105, received in the brewing vessel 102. In the latter case, the arrow A2 may denote a direction in which the brewed beverage exits the brewing vessel 102.

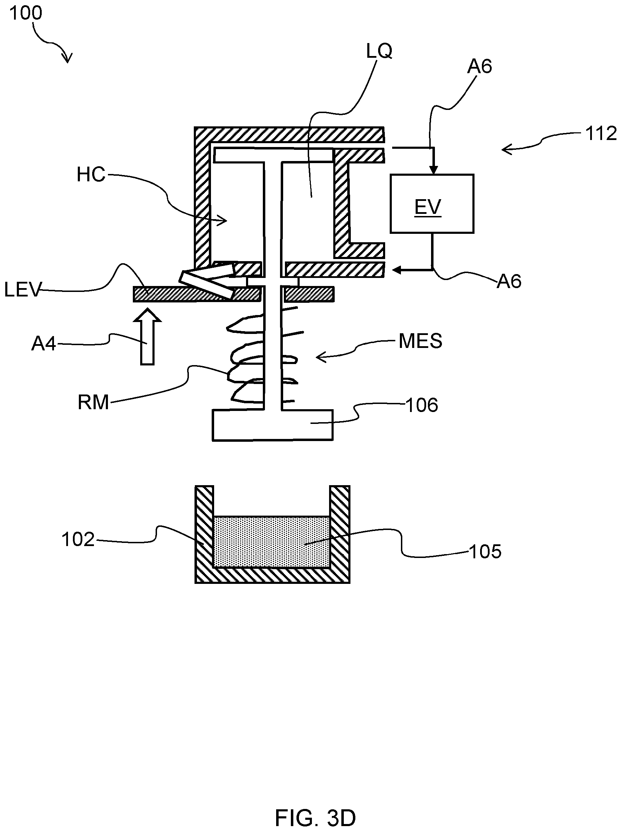

The arrow A4 in FIG. 3D denotes movement of the user-actuatable element LEV, e.g. lever, from the second position to the first position, so that the user-actuatable element LEV is readied for a new dispensing cycle. Such movement of the user-actuatable element LEV from the second position to the first position may cause the closure member and the brewing vessel 102 to move relative to each other to open the brewing vessel 102.

In some embodiments, the kitchen dispensing assembly 100 comprises a locking mechanism configured to, e.g. in response to the user's movement of the user-actuatable element LEV, lock the kitchen dispensing assembly in a filling configuration (see FIG. 3B) in which the granular material dispenser is able to dispense the granular material 105 into the brewing vessel 102.

In such embodiments, the locking mechanism may be automatically unlockable to implement the delayed closing operation (see FIG. 3C).

In some embodiments, the mechanical energy store MES is configured to release the stored mechanical energy when the locking mechanism is unlocked.

The locking mechanism can be implemented in any suitable manner. The locking mechanism can include, for example, an electromechanical actuator, such as a solenoid. In some embodiments, such as shown in FIGs. 3A to 3D, an electronic valve EV is arranged to automatically unlock the locking mechanism to implement the delayed closing operation.

It is noted that the kitchen dispensing assembly 100 according to the non-limiting example shown in FIGs. 3A to 3D can be regarded as comprising a spring buffer and lock/release mechanism. The spring (constituting the resilient member RM) can be loaded by operating the lever (constituting the user-actuatable element LEV). The spring is released when grinding/filling of the brewing vessel 102 has finished. The spring then unloads, and drives a piston (including the tamper head 106) into the brewing vessel 102 to tamp the granular material 105, e.g. coffee, received therein.

Thus, the consumer can move the user-actuatable element LEV, e.g. by pushing the lever down, so as to store the energy in the mechanical energy store MES, e.g. in the deformed resilient member RM, and be free to walk away from the kitchen dispensing assembly 100 in the knowledge that the brewing vessel 102 will be automatically closed.

The delivery of the granular material 105, e.g. involving grinding of the material, can be implemented during the delay between the user moving the user-actuatable element LEV and the brewing vessel 102 being closed. After this delay, the locking mechanism can be released and the closure member can close the brewing vessel 102 using the energy released from the mechanical energy store MES.

For example, FIG. 3A may represent a first step of the dispensing cycle, e.g. brewing cycle, in which the user may select a recipe, e.g. using a user interface included in the kitchen dispensing assembly 100, and move the user-actuable element 100 to deform/compress the resilient member RM. In this particular non-limiting example, liquid LQ in a hydraulic chamber HC locks the position of the closure member while the resilient member RM is deformed/compressed.

In FIG. 3B, the granular material 105, e.g. ground coffee, may be delivered into the brewing vessel 102 while the brewing vessel 102 remains open. This may involve the grinding assembly grinding the material, e.g. coffee beans, and the resulting granular material 105 being received in the brewing vessel 102.

In FIG. 3C, the electronic valve EV is opened so that the locking mechanism is unlocked. As shown by the direction of the arrows A5 in FIG. 3C, the unlocking comprises movement of the liquid LQ to the opposite side of the piston in the hydraulic chamber HC. This allows the closure member to be pushed by recovery/expansion of the spring into the brewing vessel 102 to close the brewing vessel 102, and in this example to tamp the granular material 105.

The electronic valve EV may then be closed and liquid, e.g. water, dispensed into the closed brewing vessel 102 to brew the beverage.

In FIG. 3D, the electronic valve EV may be opened to allow the liquid LQ to return to the original side of the piston in the hydraulic chamber HC (see arrows A6). The user-actuatable element LEV can accordingly be moved to open the brewing vessel 102 again.

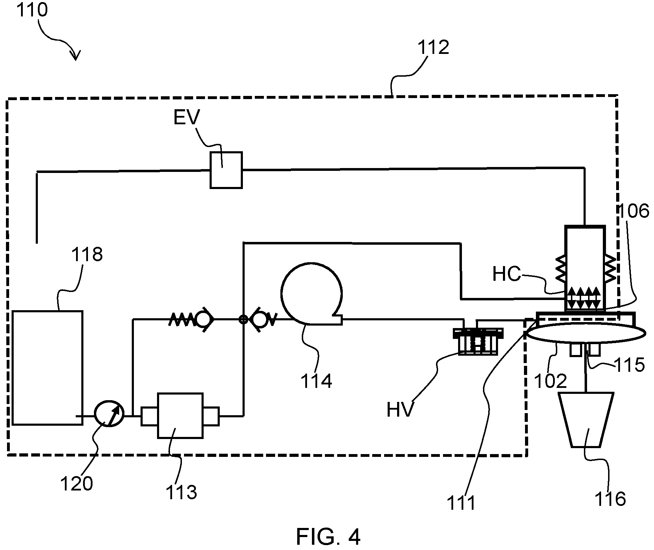

In some embodiments, and referring now to FIG. 4, the kitchen dispensing assembly 100 comprises a liquid dispenser 110 for delivering the liquid, e.g. heated liquid, such as heated water, into the brewing vessel 102 containing the granular material 105.

The liquid dispenser 110 may be arranged to deliver the liquid into the brewing vessel 102 containing the granular material 105 while the brewing vessel 102 remains mounted in the kitchen dispensing assembly 100, with the kitchen dispensing assembly 100 being configured to require demounting of the brewing vessel 102 from the kitchen dispensing assembly 100 by the user to enable emptying of the granular material 105 from the brewing vessel 102 following the delivery of the liquid into the brewing vessel 102 containing the granular material 105. This can provide enhanced user convenience, since the user is not required to demount the brewing vessel 102 from the kitchen dispensing assembly 100 until after the liquid has been delivered into the brewing vessel 102 to brew the beverage via contact between the liquid and the granular material 105.

In other embodiments, the kitchen dispensing assembly 100 is configured to require demounting of the brewing vessel 102, containing the granular material 105, therefrom, and remounting of the brewing vessel 102 containing the granular material 105 in the kitchen dispensing assembly 100 in a brewing position that enables the liquid dispenser 110 to deliver the liquid into the brewing vessel 102 containing the granular material 105.

In some embodiments, and still referring to FIG. 4, the liquid dispenser 110 has a liquid outlet 111 and a hydraulic system 112 for delivering liquid into the brewing vessel 102 via the liquid outlet 111.

The hydraulic system 112 may, for example, force liquid through the brewing vessel's 102 cavity 103. To this end, the hydraulic system 112 may include a pump 113 for displacing the liquid towards and through the liquid outlet 111.

It is noted that the hydraulic system 112 may be regarded as a "hydraulic circuit", given that the hydraulic system 112 may include an interconnected set of discrete components involved in the transportation of the liquid, e.g. water.

In at least some embodiments, such as shown in FIG. 4, the liquid dispenser 110, or more specifically the hydraulic system 112 included in the liquid dispenser 110, comprises a heater 114 and a liquid flow path along which liquid is displaced through the heater 114 in order for the liquid to be heated and then delivered into the brewing vessel 102 via the liquid outlet 111.

In some embodiments, the liquid dispenser 110 is configured to dispense liquid into the brewing vessel 102 in response to a liquid pressure, e.g. water pressure, reaching or exceeding a threshold pressure, for example about 4 bar. Such a threshold pressure may, for example, be set according to the type of beverage, e.g. coffee, such as espresso, that is intended to be brewed in the brewing vessel 102.

In such embodiments, one or more valves HV included in the hydraulic system 112 may open in response to the threshold pressure being reached or exceeded.

In some embodiments, the liquid dispenser 110 and the brewing vessel 102 are configured to enable a fluid pressure of at least 5 bar, preferably at least 6 bar, to be provided for forcing the liquid, e.g. heated water, through the cavity 103 containing the granular material 105.

Alternatively or additionally, the kitchen dispensing assembly 100 may comprise a pressure control system for enabling a controlled pressure to be exerted by a surface of the tamper head 106 on the granular material 105 during tamping.

In some embodiments, such as shown in FIG. 4, the closing system is included in the liquid dispenser 110. The closure member may close the cavity 103 of the brewing vessel 102 to define the brewing chamber to which the liquid is deliverable, e.g. via one or more openings, constituting the liquid outlet 111, defined in the closure member, e.g. the tamper head 106 thereof.

Alternatively or additionally, the liquid dispenser's 110 hydraulic system 112 may be configured to control movement, e.g. lowering, of the closure member towards the granular material 105 received in the brewing vessel 102.

When the pressure inside the brewing chamber and in the hydraulic system 112 reaches or exceeds the threshold pressure, for example about 4 bar, the liquid, e.g. water, may be delivered into the brewing chamber. It is reiterated that such pressure-responsive heated water delivery may be implemented by, for example, opening of valve(s) HV in the hydraulic system 112.

In embodiments in which the liquid dispenser's 110 hydraulic system 112 is configured to control relative movement of the closure member and the brewing vessel 102, the liquid, e.g. water, employed for this purpose may not be guided through the heater 114 that may be included in the liquid dispenser 110. This may be in contrast to the path defined for the liquid, e.g. water, used for brewing the beverage.

In more general terms, the kitchen dispensing assembly 100, e.g. the closing system thereof, may comprise one or more of an electromechanical system, a motorized system, a hydraulic assembly, and a pneumatic system configured to enable relative movement of the closure member and the brewing vessel 102 so that the closure member closes the brewing vessel 102.

In some embodiments, the hydraulic system 112, e.g. the hydraulic system 112 including the electronic valve EV, is arranged to automatically unlock the locking mechanism to implement the delayed closing operation. The same hydraulic system 112 that is included in the liquid dispenser 110 can accordingly be advantageously employed to unlock the locking mechanism in order to implement the delayed closing operation.

In some embodiments, such as schematically shown in FIG. 4, the brewing vessel 102, comprises an outlet member that delimits an orifice 115 through which the beverage brewed in the brewing vessel 102, e.g. brewed in the cavity 103 of the brewing vessel 102, is deliverable.

Such an orifice 115 can assist to maintain elevated pressure in the brewing vessel 102/brewing chamber, and thus help to generate a crema layer when coffee is being brewed in the brewing vessel 102. Such an orifice 115 may further assist to ensure complete emptying of the brewing vessel 102 after brewing is complete and/or can assist to achieve a desired temperature of the brewed beverage received in the user's cup/pot 116.

In alternative embodiments, brewing of the beverage is carried out by liquid descending by gravity only through the granular material 105.

Still referring to FIG. 4, the electronic valve EV may be opened to allow transport of the liquid back to a liquid reservoir 118.

In some embodiments, the kitchen dispensing assembly 100 comprises a controller, e.g. one or more microcontrollers, configured to control the closing system to implement the delayed closing operation.

In some embodiments, the controller is configured to control the hydraulic system 112, e.g. the pump 113 and/or electronic valve(s) EV thereof, to provide the movement of liquid in the hydraulic system 112 that causes the locking mechanism to lock/unlock.

In some embodiments, and still referring to FIG. 4, the controller controls the pump time during which liquid is delivered to the brewing vessel 102 based on information received from a flow meter 120.

When the desired volume of liquid, e.g. as indicated using the information received from the flow meter 120, has been pumped to the brewing chamber, the pump 113 may be stopped.

The controller may be configured to implement a time delay, e.g. of about 10 seconds, between stopping liquid delivery to the brewing chamber and controlling the electronic valve EV to allow liquid used to move/allow movement of the tamper head 106 to flow back to the liquid reservoir 118. As well as allowing time for pressure in the brewing chamber to decrease, this time delay may permit water to be released/pressed from the puck of granular material 105. It is noted that the above-mentioned 10 seconds time delay has been empirically determined.

The brewing vessel 102 may then be emptied in order to start a new dispensing cycle. The brewing vessel 102, e.g. portafilter, is first demounted from the (remainder of the) kitchen dispensing assembly 100 and the used granular material emptied therefrom.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen dispensing assembly (100) comprising:
a brewing vessel (102) mountable in, and demountable from, the kitchen dispensing assembly;
a granular material dispenser for dispensing granular material (105) into the mounted brewing vessel;
a closure member for closing the brewing vessel containing the granular material, a closing system being configured to cause relative movement of the closure member and the brewing vessel so that the closure member closes the brewing vessel; and
a user-actuatable element (LEV) that is manually moveable by a user, relative to the mounted brewing vessel, from a first position to a second position, the closing system being configured so that, in an operational mode of the kitchen dispensing assembly, the relative movement of the closure member and the brewing vessel to close the brewing vessel is implemented automatically in a delayed closing operation that is delayed relative to the movement of the user-actuatable element to allow the dispensing of the granular material into the brewing vessel before the brewing vessel is closed by the closure member, wherein the kitchen dispensing assembly is configured to require demounting of the brewing vessel from the kitchen dispensing assembly by the user to enable emptying of the granular material from the brewing vessel.

2. The kitchen dispensing assembly (100) according to claim 1, comprising a mechanical energy store (MES) configured to store mechanical energy from the user's movement of the user-actuatable element (LEV), the mechanical energy store being arranged to release the stored mechanical energy automatically to implement the delayed closing operation; optionally wherein the mechanical energy store comprises a resilient member (RM) deformable to store the mechanical energy.

3. The kitchen dispensing assembly (100) according to claim 1 or claim 2, wherein the granular material dispenser is configured to dispense the granular material (105) into the mounted brewing vessel (102) subject to the user-actuatable element (LEV) being moved by the user.

4. The kitchen dispensing assembly (100) according to any one of claims 1 to 3, comprising a locking mechanism configured to lock the kitchen dispensing assembly in a filling configuration in which the granular material dispenser is able to dispense the granular material (105) into the brewing vessel (102), the locking mechanism being automatically unlockable to implement the delayed closing operation.

5. The kitchen dispensing assembly (100) according to claim 4 as according to claim 2, wherein the mechanical energy store (MES) is configured to release the stored mechanical energy when the locking mechanism is unlocked.

6. The kitchen dispensing assembly (100) according to claim 4 or claim 5, comprising an electromechanical, motorized, pneumatic and/or hydraulic system arranged to automatically unlock the locking mechanism to implement the delayed closing operation.

7. The kitchen dispensing assembly (100) according to any one of claims 1 to 6, wherein the user-actuatable element (LEV) comprises a lever moveable by the user between the first position and the second position.

8. The kitchen dispensing assembly (100) according to claim 7, wherein the lever is moveable in a downwards or upwards direction, when the kitchen dispensing assembly is orientated for use, when being moved between the first position and the second position; optionally wherein the lever is moveable in the downwards direction when being moved from the first position to the second position.

9. The kitchen dispensing assembly (100) according to any one of claims 1 to 8, wherein the closing system is configured so that, in a further operational mode of the kitchen dispensing assembly, the relative movement of the closure member and the brewing vessel (102) to close the brewing vessel is implemented without delay relative to the movement of the user-actuatable element (LEV), or with less delay than that used to delay the delayed closing operation.

10. The kitchen dispensing assembly (100) according to any one of claims 1 to 9, wherein the closure member comprises a tamper head (106), and the closing system is configured to drive relative movement of the tamper head and the brewing vessel (102) to tamp the granular material (105) received in the brewing vessel during the relative movement of the closure member and the brewing vessel.

11. The kitchen dispensing assembly (100) according to any one of claims 1 to 10, wherein the granular material dispenser comprises a grinding assembly for grinding material to form the granular material (105).

12. The kitchen dispensing assembly (100) according to any one of claims 1 to 11, comprising one or more of an electromechanical system, a motorized system, a hydraulic assembly, and a pneumatic system configured to enable relative movement of the closure member and the brewing vessel (102) so that the closure member closes the brewing vessel.

13. The kitchen dispensing assembly (100) according to any one of claims 1 to 12, comprising a liquid dispenser (110) for delivering liquid into the brewing vessel (102) containing the granular material (105).

14. The kitchen dispensing assembly (100) according to claim 13 as according to claim 6, comprising the hydraulic system (112) arranged to automatically unlock the locking mechanism to implement the delayed closing operation, the hydraulic system being further arranged to deliver the liquid into the brewing vessel containing the granular material (105).

15. The kitchen dispensing assembly (100) according to claim 13 or claim 14, wherein the liquid dispenser (110) is arranged to deliver the liquid into the brewing vessel (102) containing the granular material (105) while the brewing vessel remains mounted in the kitchen dispensing assembly, and wherein the kitchen dispensing assembly is configured to require demounting of the brewing vessel from the kitchen dispensing assembly by the user to enable emptying of the granular material from the brewing vessel following the delivery of the liquid into the brewing vessel containing the granular material; or
wherein the kitchen dispensing assembly is configured to require demounting of the brewing vessel, containing the granular material, therefrom, and remounting of the brewing vessel containing the granular material in the kitchen dispensing assembly in a brewing position that enables the liquid dispenser to deliver the liquid into the brewing vessel containing the granular material.
